# EUROPÄISCHE PATENTSCHRIFT

(11) **EP 0 974 854 B1**
(45) Veröffentlichungstag und Bekanntmachung des Hinweises auf die Patenterteilung: **27.01.2010**
(21) Anmeldenummer: 98810702.5
(22) Anmeldetag: 21.07.1998
(51) Int. Cl.: G02B 6/38

(54) **Optisches Modul für eine optische Steckverbindung**
Optical module for an optical plug connection
Module optique pour un connecteur optique

(43) Veröffentlichungstag der Anmeldung: 26.01.2000
(73) Patentinhaber: Diamond SA, 6616 Losone (CH)
(72) Erfinder: De Marchi, Silverino, 6612 Ascona (CH)
(74) Vertreter: Wenger, René

(56) Entgegenhaltungen:
- EP-A- 0 597 501
- EP-A- 0 696 748
- EP-A- 0 730 177
- EP-A2- 0 848 267
- EP-A2- 0 849 602
- WO-A-97/34176
- DE-A- 4 329 824
- DE-U- 29 504 575
- DE-U- 29 512 773
- DE-U- 29 614 436
- DE-U- 29 708 275
- JP-U- 6 037 808
- US-A- 4 986 762
- US-A- 5 757 998

## Beschreibung

Die Erfindung betrifft ein optisches Modul, insbesondere Buchsenteil für eine optische Steckverbindung gemäss dem Oberbegriff von Anspruch 1. Die Halterung erfüllt dabei den Zweck, das selber nicht mit Haltemitteln ausgerüstete Modul aufzunehmen und auf einer Trägerplatte, beispielsweise auf einer gedruckten Schaltung oder an einer Gerätewand zu befestigen. Beim Buchsenteil kann es sich um eine Durchführungskupplung handeln, welche von beiden Seiten einen optischen Stecker aufnehmen kann. Alternativ könnte das Buchsenteil aber auch als Receptacle ausgebildet sein, bei dem ein einseitig eingesteckter Stecker Licht auf ein festmontiertes optisches Element sendet bzw. Licht von diesem Element empfängt.

Ein gattungsmässig vergleichbares Modul und eine dazugehörige Halterung ist beispielsweise durch die DE U 297 08 275 bekannt geworden. Ein Nachteil dieser Ausführungsform besteht darin, dass die Befestigung auf der Trägerplatte nur auf eine einzige Art und Weise möglich ist, nämlich mit gegen die Trägerplatte gerichteten U-Schenkeln der Halterung. Ausserdem ist diese bekannte Halterung dazu bestimmt, mit der Trägerplatte verlötet zu werden, was ein rasches Auswechseln verunmöglicht.

In der DE 43 29 824 A1 ist ein Buchsenteil gezeigt, auf das U-förmige Halterungen rastend anbringbar sind. Hierzu sind aufeinander gegenüberliegenden Seitenwänden des Buchsengehäuses entsprechende Erhebungen angeordnet.

Die DE 295 04 575 U1 sowie die EP 597 501 A1 betreffen jeweils Duplex-Stecker mit Duplex-Befestigungsklammern. Die einzelnen Steckerteile können bei diesen Anordnungen von der Seite her rastend in die Befestigungsklammer eingesetzt werden.

In der WO 97/34176 wird ein mehrteiliges Steckerteil mit einem Sockelstück beschrieben, das von einem zweiteiligen Gehäuse umgeben ist. Die jeweiligen Gehäuseschalen können auf das Sockelstück geschnappt werden.

DE 295 12 773 U1 und DE 296 14 436 U1 zeigen Halterungen für die Befestigung von Buchsenteil-Paaren auf einer Platine. Hierzu wird eine prismatische Hülse verwendet, wobei für eine rastende Verbindung den Buchsenteilen zugeordnete Stützrippen dienen.

In der EP 848 267 A2 sind verschiedene Ausführungen von Steckerverbindungen zwischen Steckerteilen und Buchsenteilen in einer Duplex-Bauweise gezeigt.

Die EP 849 602 A2 betrifft eine Anordnung enthaltend ein Buchsenteil, in welches ein Einzelstecker einführbar ist. Zum Anschliessen eines zweiten Steckerteils ist eine prismatisch ausgebildete Hülse vorgesehen. Zum Vorgeben einer Rastverbindung für die Hülse sind auf dem Buchsenteil auf drei Seitenwänden entsprechende Vertiefungen angeordnet.

Schliesslich zeigt die JP 6-37808 eine optische Steckerverbindung zwischen einem steckerteil und einem Buchsenteil. Das Steckerteil verfügt über verschiedene Erhebungen und Vertiefungen, die zur Erstellung einer Rastverbindung nach dem Einsetzen des Steckers mit komplementären Anordnungen des Buchsenteils zusammen wirken.

Es ist daher eine Aufgabe der Erfindung, ein optisches Modul der eingangs genannten Art zu schaffen, das auf unterschiedliche Weise in der U-förmigen Halterung fixiert werden kann und das daher auch vielseitiger einsetzbar ist. Diese Aufgabe wird erfindungsgemäss mit einem Modul gelöst, das die Merkmale im Anspruch 1 aufweist. Die auf verschiedenen Seiten angeordneten Rastmittel ermöglichen es, die Halterungen auf sich kreuzenden Ebenen auf das Gehäuse aufzuschnappen. Zwar kann dabei an einem Modul nur eine einzige Halterung aufgeschnappt werden, wobei die Rastmittel auf einer Seitenwand bzw. auf zwei parallelen Seitenwänden zum Einsatz kommen und die Rastmittel auf den übrigen Seitenwänden funktionslos bleiben. Mit dem gleichen Modul ist jedoch eine Vielzahl von Befestigungsmöglichkeiten gewährleistet, wobei die Halterungen nicht zwingend mit den U-Schenkeln gegen die Trägerplatte gerichtet sein müssen. Auch parallel zur Tägerplatte verlaufende U-Schenkel oder gar von der Tägerplatte weggerichtete U-Schenkel sind grundsätzlich denkbar.

Zur Fixierung des optischen Moduls in Längsrichtung ist an den beiden Endabschnitten des Gehäuses je ein wenigstens teilweise umlaufender Kragen als Seitenbegrenzung für die Halterung angeordnet. Da das Gehäuse aus Kunststoffmaterial hergestellt ist, ist der Kragen einstückig mit dem Gehäuse ausgebildet.

Die Rastmittel werden aber auch an parallelen Seitenwänden durch wenigstens eine im Grundriss vorzugsweise rechteckige Erhebung gebildet, die an wenigstens einem Abschnitt in eine Ausnehmung an der Halterung eingreift. Diese Erhebung ist ebenfalls einstückig mit der Gehäuseseitenwand ausgebildet und sie kann noch die zusätzliche Funktion haben, die betreffende Seitenwand zu verstärken.

Die Rastmittel können zusätzlich wenigstens an einer Seitenwand durch an den Endabschnitten des Gehäuses angeordnete Erhebungen gebildet werden, welche in korrespondierende Ausnehmungen an der Halterung angreifen. Diese Erhebungen können dabei zungenartig aus den oben erwähnten Kragen herauswachsen und ihre Dicke entspricht vorzugsweise der Wandstärke der Halterung. Diese randseitigen Erhebungen können an sämtlichen Seitenwänden des Gehäuses angeordnet sein.

Schliesslich können die Rastmittel wenigstens an einer Seitenwand durch wenigstens eine Vertiefung insbesondere einen Schlitz, gebildet werden, welche eine Klaue an der Halterung aufnimmt.

Die U-förmige Halterung kann an den Stirnseiten an wenigstens einem U-Schenkel wenigstens je eine Ausnehmung aufweisen, welche der Einrastung der Halterung dienen. Sie kann aber auch noch am Wandabschnitt, der die beiden U-Schenkel miteinander verbindet eine Öffnung aufweisen. Diese dient der Aufnahme der nicht benötigten Erhebung an der Seitenwand des Gehäuses, aber auch der Gewichtseinsparung.

Die Befestigungsmittel zum Verbinden der Halterung mit der Trägerplatte könne je nach Anwendungszweck ganz unterschiedlich ausgebildet sein. Es kann sich um Schraubverbindungen, Schnappverbindungen aber auch um Scharniere für eine bewegliche Befestigung handeln. Selbstverständlich können auch die konventionellen Lötfüsse nach wie vor eingesetzt werden.

Besonders vorteilhaft verlaufen die beiden U-Schenkel der Halterung im wesentlichen planparallel zueinander, so dass eine vollflächige Anlage an den Seitenwänden des Moduls möglich ist. Damit wird das Eindringen von Staub und Schmutz in verbleibende Zwischenräume verhindert. Da die Halterung in der Regel ein Biegeteil aus Metallblech ist, wird dadurch ausserdem der Biegevorgang vereinfacht. Selbstverständlich könnten die Halterungen aber auch Spritzgussteile aus Kunststoffmaterial sein.
Weitere Vorteile und Einzelmerkmale der Erfindung ergeben sich aus den Zeichnungen und aus der nachfolgenden Beschreibung von Ausführungsbeispielen. Es zeigen:
- Figur 1: eine perspektivische Darstellung eines Duplex-Buch- senteils mit einer Vielzahl unterschiedlichen Halte- rungen,
- Figur 2: eine perspektivische Darstellung eines Simplex-Buch- senteils mit einer Vielzahl unterschiedlichen Halte- rungen,
- Figur 3: eine Halterung mit Schraubenbefestigung auf einer horizontalen Trägerplatte,
- Figur 4: eine Halterung mit Schraubenbefestigung an einer vertikalen Trägerplatte,
- Figur: 5 eine Halterung mit mittiger Klemmbefestigung an einer vertikalen Trägerplatte,
- Figur: 6 eine Halterung mit endseitiger Klemmbefestigung an einer vertikalen Trägerplatte,
- Figur 7: eine Halterung mit Scharnierbefestigung auf einem Achsabschnitt,
- Figur 8: eine vergrösserte Draufsicht aus Pfeilrichtung A der Scharnierbefestigung gemäss Figur 7,
- Figur 9: eine schematische Seitenansicht der Halterung gemäss Figur 7 in zwei verschiedenen Positionen und,
- Figur 10: eine perspektivische Darstellung eines Buchsenteils mit alternativen Rastmitteln und mit zwei komplemen- tären Halterungen.

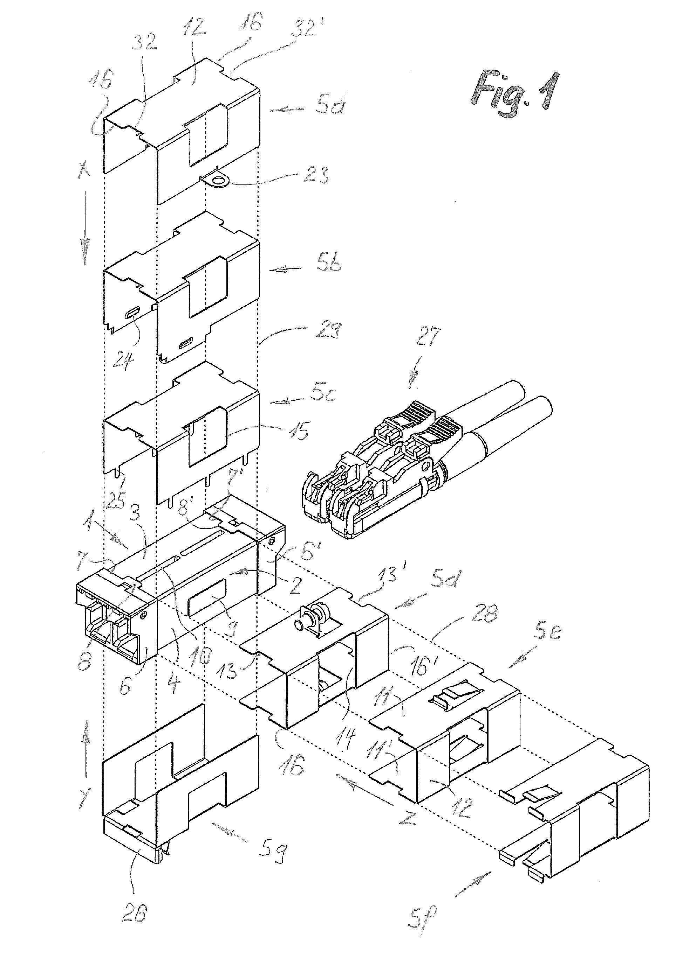

In Figur 1 ist ein typisches Buchsenteil 1 für eine optische Steckverbindung dargestellt und zwar in einer Duplexversion, zur Aufnahme je eines Steckerpaars 27 von beiden Seiten her. Das Buchsenteil verfügt über ein etwa quaderförmiges Gehäuse 2, das die hier nicht dargestellten Elemente zum Zentrieren der gegeneinander gerichteten Steckerstifte aufnimmt. Das Gehäuse verfügt über horizontale Seitenwände 3 und vertikale Seitenwände 4. Diese liegen ersichtlicherweise auf den sich im rechten Winkel kreuzenden Ebenen 28 und 29.

Das Buchsenteil 1 ist mit Endabschnitten 6, 6' versehen, welche je einen umlaufenden Kragen 7, 7' aufweisen, der sich etwas über die Seitenwände 3 und 4 erhebt. An den Seitenwänden 3 sind etwa in der Mitte zungenartige Erhebungen 8, 8' angeordnet, die einstückig mit den Kragen ausgebildet sind. Auf der gleichen Achse der Erhebungen 8, 8' ist in den Seitenwänden 3 auch ein in der Mitte unterbrochener Schlitz 10 angeordnet. Etwa im Zentrum der Seitenwände 4 ist je eine im Grundriss rechteckige Erhebung 9 vorgesehen.

Auf den sich kreuzenden Ebenen 28 und 29 sind mehrere Typen von Halterungen 5a, 5b, 5c, 5d, 5e, 5f und 5g dargestellt. Die Halterungen 5a, 5b und 5c können in Pfeilrichtung x von oben auf das Buchsenteil aufgeschnappt werden. Die Halterungen 5d, 5e und 5f sind in Pfeilrichtung z seitlich auf das Buchsenteil aufzuschnappen und die Halterung 5g kann in Pfeilrichtung y von unten aufgeschnappt werden. Die Befestigung einzelner Halterungen auf einer Trägerplatte wird nachstehend noch genauer beschrieben. Mit Ausnahme der Halterung 5c handelt es sich jeweils um lösbare Verbindungen.

Sämtliche Halterungen sind etwa U-förmig ausgebildet und verfügen über die beiden U-Schenkel 11, 11' und einen die U-Schenkel verbindenden Verbindungsabschnitt 12. Die Halterungen auf der Ebenen 29 verfügen in den U-Schenkeln über je eine mittige Ausnehmung 15. Diese Ausnehmungen haben etwa die Breite der Erhebungen 9 am Buchsenteil und die Unterkante der Ausnehmungen ist so beschaffen, dass sie unter einer Erhebung 9 einrastet. Die auf dieser Ebene liegenden Halterungen verfügen an der Stirnseite 16, 16' auch über je eine Zusatzausnehmung 32, 32' am Verbindungsabschnitt 12. Diese Zusatzausnehmungen haben keine eigentliche Haltefunktion, sondern sind nur dazu bestimmt, die Endseitigen Erhebungen 8, 8' am Buchsenteil 1 aufzunehmen.

Die auf der Ebenen 28 liegenden Halterung verfügen an den Stirnseiten 16, 16' an den U-Schenkeln 11, 11' ebnfalls über Ausnehmungen 13,13'. Diese haben jedoch die Funktion, in die Erhebungen 8, 8' am Buchsenteil 1 einzurasten und damit die Halterungen auf dem Buchsenteil zu fixieren. Dagegen ist die Öffnung 14 am Verbindungsabschnitt 12 nur dazu bestimmt die Erhebung 9 in der Mitte des Buchsenteils aufzunehmen.

Die Halterung 5a verfügt über seitliche Laschen 23, welche eine Befestigungsschraube aufnehmen können.

Die Halterung 5b ist auf der Innenseite mit Rastnocken 24 versehen. Diese können beispielsweise in einen Aufsatz auf einer Trägerplatte eingerastet werden.

Die Halterung 5c ist mit Lötfüssen 25 versehen, welche in eine Platine eingelötet werden können. Im eingelöteten Zustand kann dabei allerdings das Buchsenteil 1 nicht mehr entfernt werden.

Die Halterung 5d verfügt ebenfalls über seitliche Materialzungen 17 zur Aufnahme von Befestigungsschrauben.

Die Halterungen 5e und 5f können über eine nachstehend noch genauer beschriebene Klemmbefestigung fixiert werden und die Halterung 5g weist eine Scharnierklammer 26 auf, die nachstehend ebenfalls noch genauer beschrieben wird. Sämtliche Halterungen sind so ausgebildet, dass sie mit ihren Stirnseiten 16, 16' zwischen die umlaufenden Kragen 7, 7' am Buchsenteil 1 passen.

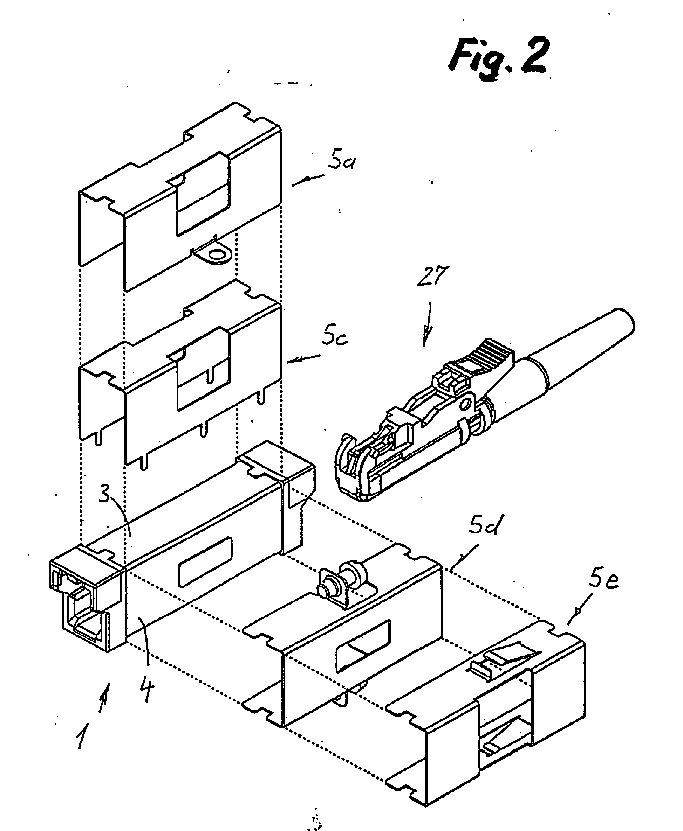

Figur 2 zeigt eine ähnliche Anordnung wie Figur 1, jedoch am Beispiel einer Simplexsteckverbindung mit nur einem einzigen Stecker auf jeder Seite des Buchsenteils 1. Das Buchsenteil und die dazu gehörigen Halterungen sind dementsprechend schmaler ausgebildet, verfügen aber über die gleichen Rast-und Befestigungsmittel, wie die Halterung der Duplexversion. Selbstverständlich sind auch die hier nicht dargestellten Halterungen 5b, 5f und 5g als Simplexversion möglich.

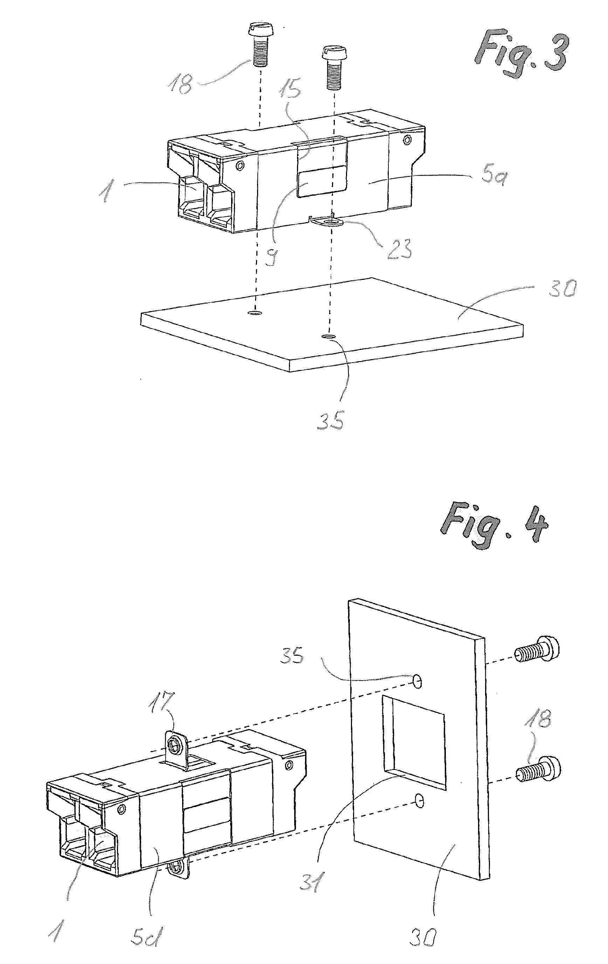

Figur 3 zeigt wie die Halterung 5a mit dem Buchsenteil 1 auf eine horizontale Trägerplatte 30 geschraubt wird. Die beiden Befestigungsschrauben 18 dringen durch die Laschen 23 und die Bohrungen 35 in der Trägerplatte. Wie dargestellt, liegt die Halterung im wesentlichen vollflächig am Gehäuse des Buchsenteils 1 an, so dass keine Zwischenräume bzw. Hohlräume verbleiben, in denen sich Schmutz ansammeln kann. Dies gilt übrigens auch für die übrigen Varianten der Halterungen.

Figur 4 zeigt eine Halterung 5d, die an einer vertikalen Trägerplatte 30 befestigt werden kann. In die beiden seitlich abstehenden Materialzungen 17 sind direkt Gewinde eingeschnitten, in welche die Befestigungsschrauben 18 eingeschraubt werden können. Die Trägerplatte 30 ist mit einer Öffnung 31 versehen, welche die Halterung 5d bzw. das Buchsenteil 1 passgenau aufnimmt.

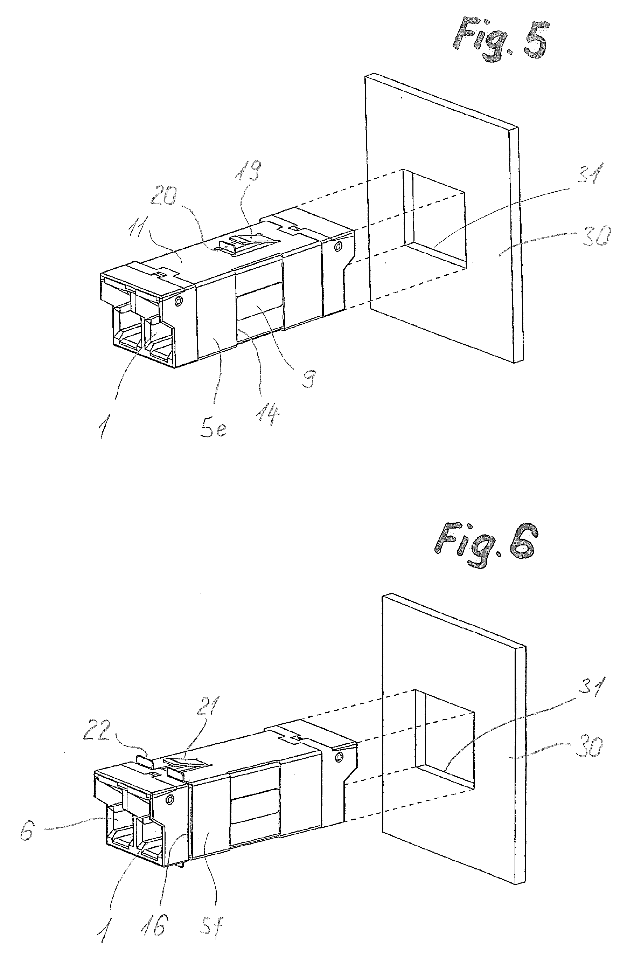

Figur 5 zeigt die Halterung 5e, die ebenfalls an einer vertikalen Trägerplatte 30 fixiert werden kann. An die Stelle der Schraubverbindung tritt jedoch eine Schnappverbindung. Diese besteht aus je einem federnden Klemmbügel 19 und einem Widerlager 20 in jedem U-Schenkel 11 bzw. 11'. Beim Einschieben der Halterung 5e in die Öffnung 31 werden die Klemmbügel niedergedrückt, bis die Widerlager 20 die Trägerplatte erreicht haben. Dann federn die Klemmbügel wieder nach aussen und verspannen auf die Weise die Halterung in der Öffnung 31.

Die in Figur 6 dargestellte Halterung 5f funktioniert im Prinzip auf die gleiche Weise wie die Halterung 5e. Die Widerlager 22 sind jedoch an der Stirnseite 16 angeordnet und die Klemmbügel 21 liegen zwischen zwei Widerlagern. Mit einer derartigen Halterung kann das Buchsenteil beispielsweise vollständig im Innern eines Geräts versenkt werden, so dass nur noch der Einführungsabschnitt des Buchsenteils 1 sichtbar ist.

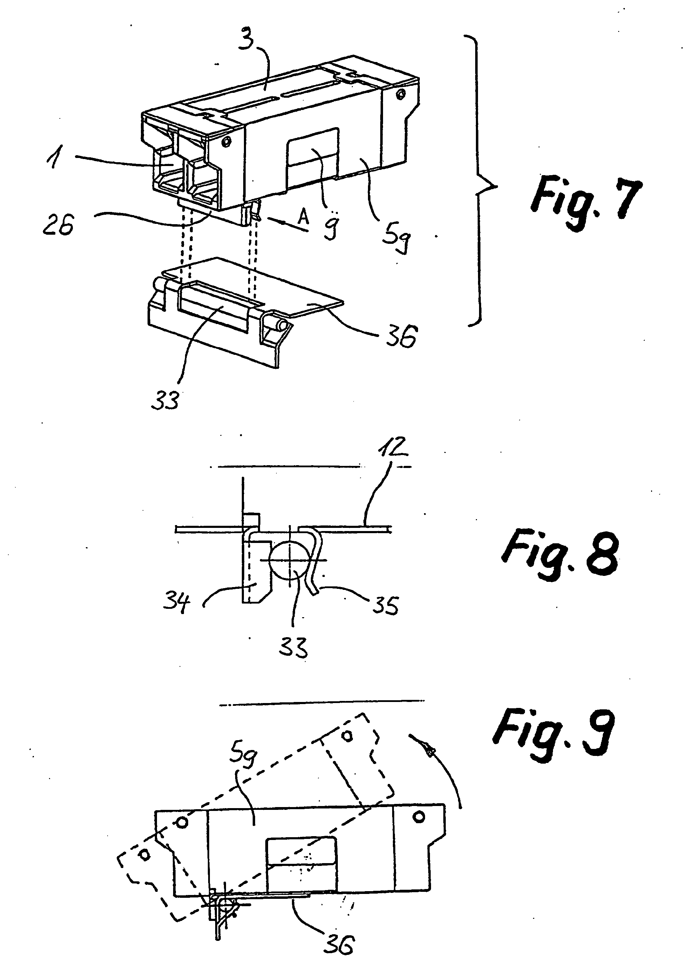

In den Figuren 7 bis 9 ist die Konstruktion und Funktion der Halterung 5g dargestellt. Die verfügt über eine Scharnierklammer 26, welche einstückig mit dem Verbindungsabschnitt 12 ausgebildet ist. Zu diesem Zweck ist stirnseitig eine Schürze 34 abgebogen, der an beiden Enden je ein Bügel 35 gegenübersteht. Auf diese Weise kann die Scharnierklammer 26 einen Achsabschnitt 33 klemmend erfassen der beispielsweise an einer geräteseitigen Achshalterung 36 befestigt ist.

In Figur 9 ist dargestellt, wie die Halterung 5g in Pfeilrichtung um den Achsabschnitt 33 hochgeschwenkt werden kann. Damit kann beispielsweise bei schwer zugänglichen Geräten der Einsteckvorgang erleichtert werden.

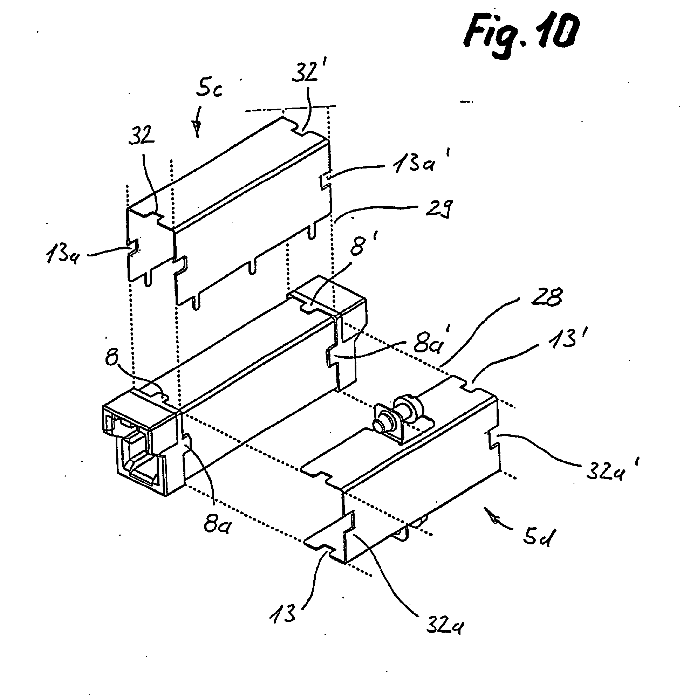

Figur 10 zeigt schliesslich noch ein alternatives Ausführungsbeispiel, bei dem an beiden Seitenwänden 3 und 4 randseitige Erhebungen 8, 8' bzw. 8a, 8a' angeordnet sind. Sinngemäss sind in den in der vertikalen Ebene 29 liegenden Halterungen auch korrespondierende Ausnehmungen 13a, 13a' vorgesehen. Die auf der horizontalen Ebene 28 liegenden Halterungen benötigen die Zusatzausnehmungen 32a, 32a' zur Aufnahme der Erhebungen 8a, 8a'.

## Patentansprüche

1. Optisches Modul, insbesondere Buchsenteil (1) für eine optische Steckverbindung, mit einem etwa quaderförmigen Gehäuse (2) aus Kunststoffmaterial, an dessen Aussenseite Rastmittel zum Lösbaren Befestigen einer etwa U-förmigen Halterung angeordnet sind, wobei die Rastmittel (8, 8', 8a, 8a', 9) wenigstens an zwei, auf sich kreuzenden Ebenen (28, 29) liegenden Seitenwänden (3, 4) derart angeordnet sind, dass am gleichen Gehäuse wenigstens zwei verschiedene Halterungen (5a bis 5g) aus verschiedenen Richtungen (x, y, z) aufschnappbar sind und wobei an den beiden Endabschnitten (6, 6') des Gehäuses (2) je ein wenigstens teilweise umlaufender, einstückig mit dem Gehäuse ausgebildeter Kragen (7, 7') als Seitenbegrenzung für die Halterung angeordnet ist, wobei die Rastmittel an parallelen Seitenwänden (3, 4) durch wenigstens eine im Grundriss vorzugsweise rechteckige, einstückig mit der Gehäuseseitenwand ausgebildete Erhebung (8a, 8a', 9) gebildet werden, die an wenigstens einem Abschnitt in eine Ausnehmung (15) an der Halterung(15) eingreifbar ist.

2. Modul nach Anspruch 1, **dadurch gekennzeichnet, dass** die Rastmittel wenigstens an einer Seitenwand (3) durch an den Endabschnitten des Gehäuses angeordnete Erhebungen (8, 8') gebildet werden, welche in korrespondierende Ausnehmungen (13, 13') an der Halterung eingreifbar sind.

3. Modul nach Anspruch 1 oder 2 mit einer Halterung, die am Gehäuse befestigt oder befestigbar ist, **dadurch gekennzeichnet, dass** die Halterung U-förmig ausgebildet ist und das Modul wenigstens teilweise umfasst und dass an der Halterung Befestigungsmittel zum Befestigen des Moduls an einer Trägerplatte (3) angeordnet sind.

4. Modul nach Anspruch 3, **dadurch gekennzeichnet, dass** an beiden Stirnseiten der Halterung wenigstens je eine Ausnehmung (13, 13') angeordnet ist, welche in korrespondierende Erhebungen (8, 8') am Modul einrasten.

5. Modul nach Anspruch 4, **dadurch gekennzeichnet, dass** der die Verbindung der U-Schenkel (11, 11') bildende Wandabschnitt (12) der Halterung eine Öffnung (14) aufweist.

6. Modul nach Anspruch 4 oder 5, **dadurch gekennzeichnet, dass** als Befestigungsmittel an den U-Schenkeln (11, 11') der Halterung je eine Befestigungsschraube (18) angeordnet ist, welche in eine rechtwinklig abstehende Materialzunge einschraubbar ist.

7. Modul nach Anspruch 4 oder 5, **dadurch gekennzeichnet, dass** als Befestigungsmittel an den U-Schenken (11, 11') der Halterung je ein federnder Klemmbügel (19) angeordnet ist, der zusammen mit einem Widerlager (20) in einer Öffnung (31) der Trägerplatte (30) verspannbar ist.

8. Modul nach Anspruch 3, **dadurch gekennzeichnet, dass** in den U-Schenkeln der Halterung Ausnehmungen (15) zur Aufnahme von Erhebungen (9) am Modul angeordnet sind.

9. Modul nach Anspruch 8, **dadurch gekennzeichnet, dass** als Befestigungsmittel an den Enden der U-Schenkel abgewinkelte Laschen (23) zur Aufnahme einer Befestigungsschraube angeordnet sind.

10. Modul nach Anspruch 8, **dadurch gekennzeichnet, dass** als Befestigungsmittel auf der Innenseite der U-Schenkel Rastnocken (24) angeordnet sind.

11. Modul nach Anspruch 8, **dadurch gekennzeichnet, dass** als Befestigungsmittel an dem die Verbindung der U-Schenkel bildenden Wandabschnitt eine Scharnierklammer (26) zur Aufnahme eines Achsabschnittes (33) angeordnet ist.

12. Modul nach einem der Ansprüche 3 bis 11, **dadurch gekennzeichnet, dass** die U-Schenkel der Halterung zur vollflächigen Anlage an den Seitenwänden des Moduls im wesentlich planparallel ausgebildet sind.

## Claims

1. Optical module, in particular socket part (1) for an optical plug connection, having an approximately cuboid housing (2) made of plastic material, on the outside of which latching means for releasably attaching an approximately U-shaped holder are arranged, wherein the latching means (8, 8', 9) are arranged on at least two side walls (3, 4), which are located on intersecting planes (28, 29), such that at least two different holders (5a to 5g) can be snapped on to the same housing from different directions (x, y, z) and wherein in each case one collar (7, 7'), which is at least partially circumferential and integrally formed with the housing, as a lateral boundary for the holder is arranged on the two end sections (6, 6') of the housing (2), wherein the latching means are formed on parallel side walls (3, 4) by at least one protrusion (9) which is preferably rectangular in plan view, is integrally formed with the housing side wall and can engage at least at one section in a recess (15) in the holder (15).

2. Module according to Claim 1, **characterized in that** the latching means are formed at least at one side wall (3) by protrusions (8, 8') which are arranged on the end sections of the housing and can engage in corresponding recesses (13, 13') in the holder.

3. Module according to Claim 1 or 2, having a holder which is or can be attached to the housing, **characterized in that** the holder is of U-shaped design and at least partially surrounds the module and **in that** attachment means for attaching the module to a carrier plate (3) are arranged on the holder.

4. Module according to Claim 3, **characterized in that** on both front sides of the holder in each case at least one recess (13, 13') is disposed, which latches into corresponding protrusions (8, 8') on the module.

5. Module according to Claim 4, **characterized in that** the wall section (12), which forms the connection of the U-limbs (11, 11'), of the holder has an opening (14).

6. Module according to Claim 4 or 5, **characterized in that** in each case one attachment screw (18), which can be screwed into a material tongue which projects at a right angle, is arranged as attachment means on the U-limbs (11, 11') of the holder.

7. Module according to Claim 4 or 5, **characterized in that** in each case one resilient clamping bracket (19), which can be braced together with an abutment (20) in an opening (31) in the carrier plate (30), is arranged as attachment means on the U-limbs (11, 11') of the holder.

8. Module according to Claim 3, **characterized in that** recesses (15) for receiving protrusions (9) on the module are arranged in the U-limbs of the holder.

9. Module according to Claim 8, **characterized in that** tabs (23), which are angled away, for receiving a fastening screw are arranged as attachment means on the ends of the U-limbs.

10. Module according to Claim 8, **characterized in that** latching cams (24) are arranged as attachment means on the inside of the U-limbs.

11. Module according to Claim 8, **characterized in that** a hinge clamp (26) for receiving a pin section (33) is arranged as attachment means on the wall section which forms the connection of the U-limbs.

12. Module according to one of Claims 3 to 11, **characterized in that** the U-limbs of the holder are configured to be substantially plane-parallel in order to bear, over the entire surface, against the side walls of the module.

## Revendications

1. Module optique, notamment partie femelle (1) pour un connecteur optique, ayant un boîtier (2) de forme approximativement parallélépipédique en matière plastique sur le côté extérieur duquel sont disposés des moyens d'enclenchement pour la fixation amovible d'un support approximativement en forme de U, les moyens d'enclenchement (8, 8', 9) étant disposés au moins sur deux parois latérales (3, 4) qui se trouvent sur des plans (28, 29) qui se croisent de telle sorte que sur un même boîtier peuvent venir s'enclipser au moins deux supports (5a à 5g) différents depuis des directions (x, y, z) différentes et une collerette (7, 7') faisant office de limitation latérale pour le support, réalisée d'une seule pièce avec le boîtier (2) et à chaque fois au moins partiellement périphérique, étant disposée sur les deux portions d'extrémité (6, 6') du boîtier (2), les moyens d'enclenchement sur les parois latérales (3, 4) parallèles étant formés par au moins un bossage (9) au plan horizontal de préférence rectangulaire et formé d'une seule pièce avec la paroi latérale du boîtier, lequel peut venir en prise sur au moins une portion dans un creux (15) sur le support (15).

2. Module selon la revendication 1, **caractérisé en ce que** les moyens d'enclenchement sont formés sur au moins une paroi latérale (3) par des bossages (8, 8') disposés sur les portions d'extrémité du boîtier, lesquels peuvent venir en prise dans des creux (13, 13') correspondants sur le support.

3. Module selon la revendication 1 ou 2 comprenant un support qui est fixé ou peut être fixé au boîtier, **caractérisé en ce que** le support est réalisé en forme de U et entoure au moins partiellement le module et que des moyens de fixation destinés à fixer le module à une plaque porteuse (3) sont disposés sur le support.

4. Module selon la revendication 3, **caractérisé en ce qu'**au moins un creux (13, 13') est disposé sur les deux côtés frontaux du support, lequel vient s'enclencher dans les bossages (8, 8') correspondants sur le module.

5. Module selon la revendication 4, **caractérisé en ce que** la portion de paroi (12) du support qui forme la liaison de la branche du U (11, 11') présente une ouverture (14).

6. Module selon la revendication 4 ou 5, **caractérisé en ce que** les moyens de fixation qui sont disposés sur les branches du U (11, 11') du support sont respectivement une vis de fixation (18) qui peut être vissée dans une languette de matière faisant saillie à angle droit.

7. Module selon la revendication 4 ou 5, **caractérisé en ce que** les moyens de fixation qui sont disposés sur les branches du U (11, 11') du support sont respectivement un étrier de serrage (19) souple qui, conjointement avec un élément de butée (20), peut être fixé par déformation dans une ouverture (31) de la plaque porteuse (30).

8. Module selon la revendication 3, **caractérisé en ce que** des creux (15) destinés à accueillir des bossages (9) sur le module sont disposés dans les branches du U du support.

9. Module selon la revendication 8, **caractérisé en ce que** les moyens de fixation aux extrémités de la branche du U sont des éclisses (23) coudées destinées à accueillir une vis de fixation.

10. Module selon la revendication 8, **caractérisé en ce que** les moyens de fixation disposés sur le côté intérieur de la branche du U sont des cames d'enclenchement (24).

11. Module selon la revendication 8, **caractérisé en ce que** le moyen de fixation sur la portion de paroi qui forme la liaison des branches du U est une bride à charnière (26) destinée à accueillir une portion d'un axe (33).

12. Module selon l'une des revendications 3 à 11, **caractérisé en ce que** la branche de U du support est configurée pour être appliquée sur toute sa surface sur les parois latérales du module pour l'essentiel avec les faces parallèles.
